(19) Europäisches Patentamt
European Patent Office
Office européen des brevets

(11) EP 3 112 483 A1

(12) EUROPEAN PATENT APPLICATION
published in accordance with Art. 153(4) EPC

(43) Date of publication:
04.01.2017 Bulletin 2017/01

(51) Int Cl.:
C22C 14/00 (2006.01)     B21C 37/08 (2006.01)
C22F 1/18 (2006.01)     C22F 1/00 (2006.01)

(21) Application number: 15777533.9

(22) Date of filing: 09.04.2015

(86) International application number:
PCT/JP2015/061117

(87) International publication number:
WO 2015/156358 (15.10.2015 Gazette 2015/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 10.04.2014 JP 2014081048

(71) Applicant: Nippon Steel & Sumitomo Metal
Corporation
Tokyo 100-8071 (JP)

(72) Inventors:
• KAWAKAMI, Akira
Tokyo 100-8071 (JP)
• TAKAHASHI, Kazuhiro
Tokyo 100-8071 (JP)
• FUJII, Hideki
Tokyo 100-8071 (JP)

(74) Representative: Vossius & Partner
Patentanwälte Rechtsanwälte mbB
Siebertstrasse 3
81675 München (DE)

(54) **WELDED PIPE OF + TITANIUM ALLOY WITH EXCELLENT STRENGTH AND RIGIDITY IN PIPE-LENGTH DIRECTION, AND PROCESS FOR PRODUCING SAME**

(57)     Provided is an α+β titanium alloy welded pipe excellent in the strength and the rigidity in the pipe longitudinal direction, the α+β titanium alloy welded pipe having a composition consisting of, in mass%, Fe: 0.8% to 1.5%, N: 0.02% or less, and the balance: Ti and impurities, and satisfying Q shown in Formula (1) being 0.34 to 0.55. A tensile strength in a pipe longitudinal direction is more than 900 MPa and a Young's modulus in the pipe longitudinal direction is more than 130 GPa.

$$Q = [O] + 2.77 \times [N] + 0.1 \times [Fe] \cdots (1)$$

where [Fe], [O], and [N] represent the amounts of the respective elements contained [mass%].

FIG. 1

EP 3 112 483 A1

**Description**

Technical Field

The present invention relates to an $\alpha+\beta$ titanium alloy welded pipe having a high strength and a high Young's modulus in the pipe longitudinal direction and a method for producing the same.

Background Art

An $\alpha+\beta$ titanium alloy has been in use for a long time as constituent members of airplanes etc., with its high specific strength utilized. These days, the weight ratio of the titanium alloy used for airplanes is increasing, and the importance thereof is becoming higher and higher. Also in the consumer product field, an $\alpha+\beta$ titanium alloy having a high Young's modulus and a light specific gravity is increasingly used for golf club faces. Further, the high-strength $\alpha+\beta$ titanium alloy is used partly also for automobile parts in which weight reduction is regarded as important, geothermal well casings and oil well pipes for which corrosion resistance and specific strength are required, or the like, and is expected to expand its use further.

An $\alpha+\beta$ titanium alloy pipe product has excellent corrosion resistance and high strength, and is therefore used in the energy field such as the geothermal well casings and the oil well pipes mentioned above. Further, a heat-resistant alloy pipe product having high specific strength and excellent high-temperature strength is used for exhaust pipes of automobiles and the like.

Further, the $\alpha+\beta$ titanium alloy pipe product holds promise also for use in, utilizing its high specific strength, strength members such as frames and reinforcing parts of automobiles and motorcycles. In these uses, it is necessary that the strength and the rigidity in the pipe longitudinal direction be high, and particularly it is preferable that the tensile strength be 900 MPa or more and the Young's modulus be 130 GPa or more. In addition, low production costs are required more than in other uses. In these uses, since weight reduction is particularly effective, the need for a pipe product with a smaller wall thickness and a smaller diameter having a high rigidity and a high strength in the pipe axial direction is becoming higher and higher.

As a method to obtain the $\alpha+\beta$ titanium alloy pipe, methods in which a seamless pipe is produced using the skew rolling method are described in Patent Literature 1 and Patent Literature 2. Patent Literature 1 aims to improve the fracture toughness by prescribing the hot rolling conditions and performing annealing at a temperature not less than the $\beta$-transformation temperature. However, when annealing is performed at not less than the $\beta$-transformation temperature, the mechanical characteristics of the $\alpha+\beta$ alloy sheet after hot rolling become isotropic and the strength and the elastic modulus become similar at a not-so-high level between in the pipe longitudinal direction and in the round direction, and it is difficult to achieve a strength increase and a rigidity increase in the pipe longitudinal direction which the present invention aims at.

In Patent Literature 2, in a skew rolling process that involves hot processing, which is severe on the material being hot rolled because of the introduction of large shear strain into the material surface, the hot processing temperature in each step is prescribed with the aim of ensuring the hot processability of the material. Also in this case, it is impossible to obtain a hot rolling texture having a high strength in the pipe longitudinal direction, and it is difficult to achieve a strength increase and a rigidity increase in the pipe longitudinal direction which the present invention aims at.

Other than the skew rolling method, there is a method of obtaining a seamless pipe by a hot extrusion process using the Ugine-Sejournet process etc. In all the methods, it is difficult to obtain a texture that can achieve a strength increase and a rigidity increase in the pipe longitudinal direction. Furthermore, since productivity is generally low as compared with a process in which a sheet-like material is bent to produce a welded pipe, there is also a problem that production costs are high.

Next, as methods to obtain an $\alpha+\beta$ titanium alloy pipe, methods in which a sheet-like material obtained by hot rolling or additionally by cold rolling is bent and the butts are joined by TIG, MIG, EB, or plasma arc welding, or the like to produce a welded pipe are described in Patent Literature 3 and Patent Literature 4. In both of them, productivity is high as compared with skew rolling or the hot extrusion process, and furthermore cutting for correcting uneven wall thickness, which is often seen in seamless pipes, is not needed and therefore the yield is high; thus, production costs can be reduced.

In Patent Literature 3, in Ti-3% Al-2.5% V and Ti-6% Al-4% V ("%" refers to mass%, hereinafter omitted), uneven wall thickness is suppressed by prescribing the wall thickness tolerance of the welded pipe at a low level, and thus the need for a lot of cutting is eliminated. Further, similarly to Patent Literature 1, Patent Literature 3 aims to enhance the fracture toughness by utilizing a $\beta$-annealing structure. Therefore, also in this case, strength becomes similar between in the pipe longitudinal direction and in the round direction, and material anisotropy is not exhibited; hence, it is difficult to achieve a strength increase and a rigidity increase in the pipe longitudinal direction which the present invention aims at.

In Patent Literature 4, it is described that, when a titanium or titanium alloy welded pipe is continuously formed by the roll forming method using a striped material called hoops, a plurality of welding torches are used and thereby both the non-existence of welding portion defects and an improvement in production efficiency can be achieved. However, it is described that, in this process, a welded pipe is produced by bending the sheet width direction of the material hoop; thus, this is not directed toward enhancing the strength and the rigidity in the pipe longitudinal direction, as described later.

In Patent Literature 5, Patent Literature 6, and Patent Literature 7, heat-resistant titanium alloys are disclosed for use in exhaust pipes of automobiles and motorcycles. These alloys have features of excellent high-temperature strength and oxidation resistance and also excellent cold processability. However, the tensile strength at room temperature of these alloys is approximately 400 to 600 MPa, and it is impossible to obtain a room-temperature tensile strength in the pipe longitudinal direction of 900 MPa or more, which is required for frames of motorcycles and bicycles, strength members of automobiles, and the like.

In Non-Patent Literature 1, an example of the relationship between strength anisotropy and texture in the sheet plane in pure titanium is described, and it is described that the anisotropy of yield stress is larger in a transverse-texture (a texture in which the c-axis direction, which is the direction normal to the (0001) plane, i.e. the HCP bottom plane, of the titanium $\alpha$-phase is strongly oriented in the sheet width direction (an orthogonal-to-rolling direction); hereinafter, referred to as a T-texture) than in a basal-texture (a texture in which the HCP bottom plane is oriented in the direction of the normal to the sheet or a direction close to this; hereinafter, referred to as a B-texture).

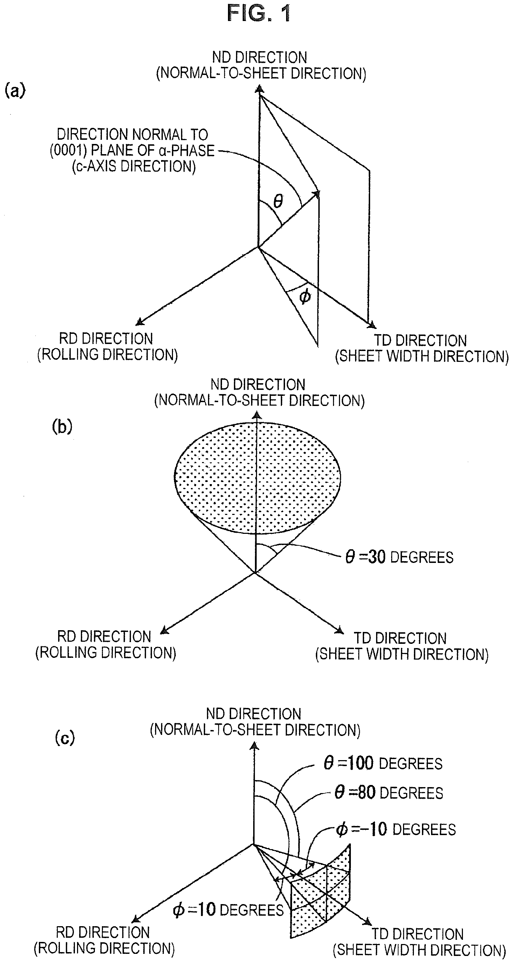

A way of expression of the c-axis direction, which is the direction normal to the (0001) plane, i.e. the bottom plane of the hexagonal crystal HCP structure, of the titanium $\alpha$-phase is shown in FIG. 1. The angle between the normal-to-sheet-plane direction (the ND axis) and the c-axis is denoted by $\theta$. Further, the angle between the line obtained by projecting the c-axis onto the sheet plane and the sheet width direction (the TD axis) is denoted by $\varphi$. In the B-texture mentioned above, the c-axis is oriented in a direction close to the ND axis, and there is no particular unevenness in the sheet plane; therefore, the angle $\theta$ is small and the angle $\varphi$ can be expressed as being distributed over the entire round from -180 degrees to 180 degrees. In the T-texture mentioned above, the c-axis is oriented in a direction close to the TD axis; therefore, the angle $\theta$ is close to 90 degrees and the angle $\varphi$ can be expressed as being distributed close to 0 degrees or close to 180 degrees. In FIG. 1, the direction shown as the rolling direction (the RD axis) is hereinafter written also as the sheet longitudinal direction.

In Non-Patent Literature 1, it is described that, in pure titanium, a texture similar to the T-texture is formed after heating to the $\beta$-temperature range.

In Patent Literature 8, a technology in which, in pure titanium, hot rolling is started in the $\beta$-temperature range is disclosed. This prevents the occurrence of creases and flaws by reducing the size of the crystal grain. As a technology to obtain stretch-expand forming performance, which is a kind of processability, a technology of a titanium alloy containing oxygen and Fe is disclosed in Patent Literature 9.

Patent Literature 10 discloses, in regard to an $\alpha+\beta$ titanium alloy, a technology related to an $\alpha+\beta$ titanium alloy sheet by which an $\alpha+\beta$ titanium alloy pipe having an axial strength of 900 MPa or more can be processed with good pipe formability and a high-strength $\alpha+\beta$ titanium alloy pipe product using the same. This utilizes the fact that, when a hot-rolled sheet serving as the material is subjected to unidirectional hot rolling, a texture called a transverse-texture (T-texture) in which the c-axis of the $\alpha$-phase (HCP structure), which is the main phase, is strongly oriented in the sheet width direction is exhibited. It utilizes the fact that, in the production of a welded pipe using this sheet, when pipe forming is performed such that the sheet longitudinal direction is the circumferential direction, processing becomes easier and the strength in the pipe axial direction becomes higher.

However, in this invention, since the material is limited to a hot-rolled sheet, it has been difficult to make the sheet thickness smaller than approximately 3.0 mm, and it has been difficult to produce a small-diameter, thin-walled pipe. In particular, in bicycle frames and the like, the need for weight reduction is high, and one having a small diameter and a thin wall and at the same time having a high strength and a high rigidity in the axial direction is desirable. However, a technology related to an $\alpha+\beta$ titanium alloy sheet by which a small-diameter, thin-walled $\alpha+\beta$ titanium alloy pipe having an axial strength of 900 MPa or more, such as one used in the fields mentioned above, can be processed with good pipe formability and a small-diameter, thin-walled $\alpha+\beta$ titanium alloy pipe product having a high strength using the same has not yet been disclosed.

In Patent Literature 11, the texture that an $\alpha+\beta$ titanium alloy hot-rolled sheet of the same composition as that of Patent Literature 10 should have in order to improve the cold rollability is disclosed, and it is described that, when the hot-rolled sheet has a developed T-texture, the coil treatability in cold working and the cold rollability are improved. Thus, the cold rollability of a titanium alloy hot-rolled sheet having the chemical components and the texture described in Patent Literature 11 is good, and a thin cold-rolled product is produced easily. However, when annealing is performed after cold rolling, it is likely that a B-texture will be produced and the T-texture produced in the hot-rolled sheet will be damaged; hence, it has been difficult to maintain a high strength and a high Young's modulus in the sheet width direction.

Citation List

Patent Literature

| Patent Literature 1: | JP H9-228014A |
| Patent Literature 2: | JP H2-34752A |
| Patent Literature 3: | JP 2001-115222A |
| Patent Literature 4: | JP 2000-158141A |
| Patent Literature 5: | JP 4486530B |
| Patent Literature 6: | JP 4516440B |
| Patent Literature 7: | JP 2007-270199A |
| Patent Literature 8: | JP S61-159562A |
| Patent Literature 9: | JP 2008-127633A |
| Patent Literature 10: | JP 2013-79414A |
| Patent Literature 11: | WO 2012/115242A1 |

Non-Patent Literature

Non-Patent Literature 1: The Japan Titanium Society (April 28, 2006), "Titanium Japan" Vol. 54, No. 1, pp. 42 to 51

Summary of Invention

Technical Problem

The present invention has been made in view of the above circumstance, and an object of the present invention is to provide a method for producing a welded pipe in which, when an $\alpha+\beta$ titanium alloy sheet is bent and both ends are butt-welded to produce a welded pipe, an $\alpha+\beta$ titanium alloy cold-rolled and annealed sheet with enhanced pipe formability is used and an $\alpha+\beta$ titanium alloy welded pipe having a high strength and a high rigidity in the pipe longitudinal direction which is formed using an $\alpha+\beta$ titanium alloy cold-rolled and annealed sheet.

Solution to Problem

To solve the issues mentioned above, the present inventors conducted extensive studies with a focus on the texture of the $\alpha+\beta$ titanium alloy sheet, and have found that the ductility in the sheet longitudinal direction is improved by developing and stabilizing the T-texture of the texture in the sheet plane direction. Further, the present inventors conducted extensive studies in order to assess the degree of stability of the T-texture, and have found that, in an $\alpha+\beta$ titanium alloy sheet having a stable T-texture that has been developed enough to make the ductility in the sheet longitudinal direction good, the texture in the sheet plane direction has a first crystal grain that is orientated to a region in which an angle $\theta$ that is the angle between the c-axis and the normal-to-sheet direction in the (0002) pole figure of the $\alpha$-phase having a hexagonal crystal structure is 0 to 30° and a second crystal grain that is oriented to a region in which the angle $\theta$ mentioned above is 80 to 100° and an angle $\varphi$ that is the angle between the line of projection of the c-axis onto the sheet plane and the sheet width direction in the (0002) pole figure of the $\alpha$-phase is -10 to 10°, and the ratio between the strongest values of X-ray relative intensity from the bottom plane of the $\alpha$-phase in the first crystal grain and the second crystal grain (second crystal grain/first crystal grain) is 5.0 or more; and have reached the present invention.
Further, the present inventors conducted extensive studies and investigations with consideration of the formation process of the texture in the $\alpha+\beta$ titanium alloy sheet in regard to the method for producing an $\alpha+\beta$ titanium alloy sheet. As a result, it has been found that, when a titanium alloy is subjected to unidirectional hot rolling or additionally to unidirectional cold rolling in the same direction as that of hot rolling, a T-texture is exhibited and the strength in the sheet width direction becomes very high, and the strength and the rigidity in the pipe axial direction can be significantly enhanced by setting the sheet width direction as the pipe longitudinal direction.
Further, the present inventors have found that, when a pipe is formed by forming processing while the longitudinal direction of the sheet in which the texture mentioned above is developed is set as the round direction of the pipe, deformation resistance is reduced and pipe formability is improved. This is because, by the development of the T-texture, the strength in the sheet longitudinal direction is reduced and the ductility is improved, as described below, and therefore the bendability in the round direction is improved by setting the sheet longitudinal direction as the round direction of the pipe.

In pure titanium, the yield stresses in the sheet width direction in the B-texture and the T-texture are greatly different, but the yield stresses in the sheet longitudinal direction are little different. However, in an α+β titanium alloy having a higher strength than pure titanium, in practice, the strength in the longitudinal direction is reduced when the T-texture is stabilized. This is due to the facts that, when titanium is cold processed near room temperature as in cold rolling, the primary slip plane is limited in the bottom plane, and that, in pure titanium, not only slip deformation but also twinning deformation in which the twinning direction is a direction close to the c-axis of HCP occurs and therefore plastic anisotropy is smaller than that of the titanium alloy. In an α+β titanium alloy in which the amount of contained O is higher than in pure titanium and Al or the like is contained, twinning deformation is suppressed and slip deformation is predominant, and therefore the material anisotropy in the sheet plane is promoted more by the bottom plane being oriented in a specific direction due to the texture formation. Thus, in the α+β titanium alloy, since the strength in the sheet longitudinal direction is reduced and the ductility is improved by stabilizing the T-texture, the deformation resistance during the forming processing into the pipe is reduced and pipe formability is improved by setting the sheet longitudinal direction as the round direction of the pipe.

Furthermore, in the α+β titanium alloy, when the rate of decrease in sheet thickness during cold rolling (hereinafter, cold rolling rate = (sheet thickness before cold rolling - sheet thickness after cold rolling)/sheet thickness before cold rolling × 100 (%)) is high, a B-texture is produced and a T-texture is not obtained depending on the conditions of subsequent annealing. Thus, the present inventors conducted extensive studies on the titanium alloy cold-rolled and annealed sheet, and have revealed the mechanism of the production of a B-texture and have found out the production conditions whereby a strong T-texture can be maintained, by controlling the cold rolling rate and the annealing conditions.

Furthermore, the present inventors have found that, by optimizing the combination and the amounts of addition of alloy elements, the T-texture is further developed in the titanium alloy cold-rolled and annealed sheet and thus the effect mentioned above can be enhanced, and a tensile strength of 900 MPa or more and a Young's modulus of 130 GPa or more can be obtained in the pipe longitudinal direction.

The gist of the present invention is as follows.

[1]

An α+β titanium alloy welded pipe produced by processing an α+β titanium alloy cold-rolled and annealed sheet consisting of, in mass%,
Fe: 0.8% to 1.5%,
N: 0.02% or less, and
the balance: Ti and impurities, and
satisfying Q shown in Formula (1) below being 0.34 to 0.55,

wherein a tensile strength in a pipe longitudinal direction is more than 900 MPa and a Young's modulus in the pipe longitudinal direction is more than 130 GPa,

$$Q = [O] + 2.77 \times [N] + 0.1 \times [Fe] \cdots (1)$$

where [Fe], [O], and [N] represent the amounts of the respective elements contained [mass%].

[2] A method for producing an α+β titanium alloy welded pipe, comprising:

producing a welded pipe by processing an α+β titanium alloy cold-rolled and annealed sheet consisting of, in mass%,
Fe: 0.8% to 1.5%,
N: 0.02% or less, and
the balance: Ti and impurities, and
satisfying Q shown in Formula (1) below being 0.34 to 0.55,

wherein, in a texture of the α+β titanium alloy cold-rolled and annealed sheet, assuming that a normal-to-rolling-plane direction is denoted by ND, a sheet longitudinal direction is denoted by RD, a sheet width direction is denoted by TD, a direction normal to a (0001) plane of an α-phase is taken as a c-axis direction, an angle between the c-axis direction and ND is denoted by θ, an angle between a line of projection of the c-axis direction onto a sheet plane and the sheet width direction (TD) is denoted by φ, a strongest intensity out of (0002)-reflection relative intensities of X-rays caused by crystal grains falling within a range of angle θ of not less than 0 degrees and not more than 30 degrees and angle φ of -180 degrees to 180 degrees is denoted by XND, and a strongest intensity out of (0002)-reflection relative intensities of X-rays caused by crystal grains falling within a range of angle θ of not less than 80 degrees and less than 100 degrees and angle φ of ±10 degrees is denoted by XTD, a ratio XTD/XND is 5.0 or more, and

when the α+β titanium alloy cold-rolled and annealed sheet is processed into a pipe shape, the sheet width direction of the α+β titanium alloy cold-rolled and annealed sheet is set as a longitudinal direction of the α+β titanium alloy welded pipe and the sheet longitudinal direction of the α+β titanium alloy cold-rolled and annealed sheet is set as a round direction of the α+β titanium alloy welded pipe,

$$Q = [O] + 2.77 \times [N] + 0.1 \times [Fe] \cdots (1)$$

where [Fe], [O], and [N] represent the amounts of the respective elements contained [mass%].

[3] The method for producing an α+β titanium alloy welded pipe according to [2], wherein

the α+β titanium alloy cold-rolled and annealed sheet is produced by using a unidirectionally hot-rolled sheet as a material and performing unidirectional cold rolling in the same direction as a direction of hot rolling and annealing, and annealing for a holding time of not less than t of Formula (2) below is performed at not less than 500°C and less than 800°C in a case where a cold rolling rate of the unidirectional cold rolling is less than 25% and annealing for a holding time of not less than t of Formula (2) below is performed at not less than 500°C and less than 620°C in a case where the cold rolling rate is 25% or more,

$$t = \exp(19180/T\text{-}15.6) \cdots (2)$$

where t: holding time (s), and T: holding temperature (K).

Advantageous Effects of Invention

According to the present invention, it is possible to provide a method for producing a welded pipe in which, in the production process of a small-diameter, thin-walled α+β titanium alloy welded pipe in which an α+β titanium alloy cold-rolled and annealed sheet is bent into a pipe shape and both ends of the bent thin sheet are butt-welded, a high-strength α+β titanium alloy cold-rolled and annealed thin sheet excellent in bendability and having good pipe formability is used and a small-diameter, thin-walled α+β titanium alloy welded pipe excellent in the strength and the rigidity in the pipe longitudinal direction which is produced using the α+β titanium alloy cold-rolled and annealed thin sheet.

Brief Description of Drawings

[FIG. 1] FIG. 1 is a diagram describing the crystal orientation of an α+β titanium alloy sheet.
[FIG. 2] FIG. 2 is an example of the (0002) pole figure of a titanium α-phase.
[FIG. 3] FIG. 3 is a schematic diagram showing the measuring positions of XTD and XND in the (0002) pole figure of the titanium α-phase.
[FIG. 4] FIG. 4 is a diagram showing the relationship between the X-ray anisotropy index and the 0.2% proof stress in the sheet longitudinal direction (rolling direction).
[FIG. 5] FIG. 5 is a diagram showing the relationship between the X-ray anisotropy index and the tensile strength (TS) in the pipe longitudinal direction (axial direction).

Description of Embodiments

An α+β titanium alloy welded pipe of the present invention is a welded pipe produced by processing an α+β titanium alloy cold-rolled and annealed sheet consisting of, in mass%, Fe: 0.8 to 1.5%, N: 0.02% or less, and the balance: Ti and impurities and satisfying Q shown in Formula (1) below being 0.34 to 0.55, in which pipe the tensile strength in the pipe longitudinal direction is more than 900 MPa and the Young's modulus in the pipe longitudinal direction is more than 130 GPa.

$$Q = [O] + 2.77 \times [N] + 0.1 \times [Fe] \cdots (1)$$

where [Fe], [O], and [N] represent the amounts of the respective elements contained [mass%].

The present inventors investigated in detail the influence of the texture in the sheet plane direction on the pipe formability of the $\alpha+\beta$ titanium alloy cold-rolled and annealed sheet for a welded pipe. As a result, it has been found that, by stabilizing the T-texture of the cold-rolled and annealed sheet used for welded pipe production, the deformation resistance in the sheet longitudinal direction is reduced and the ductility is improved, and therefore the bendability of the $\alpha+\beta$ titanium alloy sheet is improved when bending is performed such that the sheet longitudinal direction is the round direction of the pipe during the production of the welded pipe. Further, at this time, since the strength and the Young's modulus are high in the sheet width direction, characteristics of having a high strength and a high rigidity are exhibited in the pipe longitudinal direction. In particular, when cold rolling is performed at a high rate of decrease in sheet thickness and then annealing is performed, the texture mentioned above is damaged and is likely to turn into a B-texture; thus, it becomes possible for a T-texture to be stably maintained by prescribing the cold rolling rate and the conditions of subsequent annealing. The present invention has been made based on these findings.

First, a way of expression of the crystal orientation in the texture of the $\alpha+\beta$ titanium alloy cold-rolled and annealed sheet of the present invention is described using FIG. 1 again. The normal-to-rolling-plane direction of the cold-rolled and annealed sheet is denoted by an ND direction, the sheet longitudinal direction by an RD direction, and the sheet width direction by a TD direction. The sheet longitudinal direction RD of the cold-rolled and annealed sheet is the cold rolling direction of the cold-rolled and annealed sheet, and the sheet width direction TD of the cold-rolled and annealed sheet is the direction perpendicular to the sheet longitudinal direction RD and perpendicular to the normal-to-sheet-plane direction ND of the cold-rolled and annealed sheet. What is important in the present invention is the orientation of the c-axis, which is the normal to the (0001) plane, i.e. a six-fold symmetry crystal plane, of the titanium $\alpha$-phase, that is, a phase having a hexagonal crystal (HCP) crystal structure. As shown in FIG. 1(a), the angle between the c-axis and the normal-to-sheet (ND) direction is denoted by an angle $\theta$, and the angle between the line of projection of the c-axis onto the sheet plane and the sheet width (TD) direction is denoted by an angle $\varphi$. It is assumed that, when the projected line mentioned above coincides with the TD direction, the angle $\varphi = 0$.

In the $\alpha+\beta$ titanium alloy cold-rolled and annealed sheet, a low proof stress and a high ductility in the sheet longitudinal direction and a high strength and a high rigidity in the sheet width direction are exhibited when the T-texture is strongly developed. The present inventors conducted extensive studies on the alloy design and the texture formation conditions with which the T-texture is developed, and have solved the issues as follows.

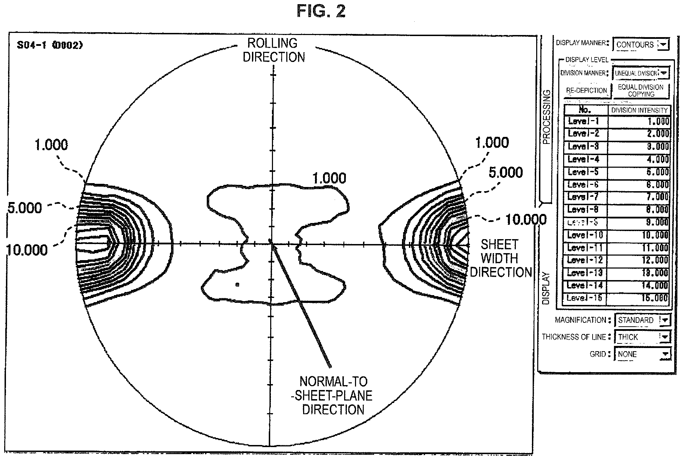

First, the degree of texture development has been assessed using the ratio of the strongest value of X-ray relative intensity from the $\alpha$-phase bottom plane obtained by the X-ray diffraction method. In FIG. 2, an example of the (0002) pole figure showing the integrated orientation of the $\alpha$-phase (HCP) bottom plane is shown. In the (0002) pole figure, which is a typical example of the T-texture, the c-axis is strongly oriented in the sheet width direction.

Such a texture is characterized by using the ratio between the degree of integration of first crystal grains in which the c-axis is oriented mainly in the ND direction and the degree of integration of second crystal grains in which the c-axis is oriented mainly in the TD direction.

That is, XND that is the strongest intensity out of the X-ray (0002)-reflection relative intensities (the strongest value of X-ray relative intensity) from the bottom plane of the $\alpha$-phase in the first crystal grain that is oriented to a region in which the angle $\theta$ that is the angle between the c-axis direction, which is the direction normal to the (0002) plane, of the $\alpha$-phase and the normal-to-sheet (ND) direction is 0 degrees to 30 degrees as shown by the hatched portion of FIG. 1(b) and the angle $\varphi$ that is the angle between the line of projection of the c-axis onto the sheet plane and the sheet width (TD) direction is -180 to 180° (the entire round) is found.

Further, XTD that is the strongest intensity out of the X-ray (0002)-reflection relative intensities (the strongest value of X-ray relative intensity) from the second crystal grain that is oriented to a region in which the angle $\theta$ that is the angle between the c-axis direction, which is the direction normal to the (0002) plane, of the $\alpha$-phase and the normal-to-sheet (ND) direction is 80 degrees to 100 degrees as shown by the hatched portion of FIG. 1(c) and the angle $\varphi$ is -10 to 10° is found.

Next, the ratio between them (XTD/XND (second crystal grain/first crystal grain)) is found. The ratio (XTD/XND) is referred to as an X-ray anisotropy index, and the degree of stability of the T-texture can be assessed by the index.

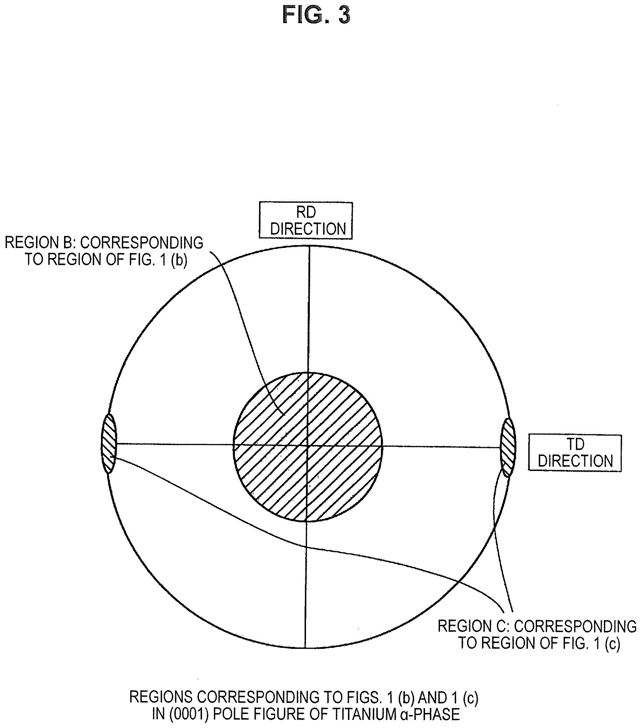

The X-ray anisotropy index (XTD/XND) in such a (0002) pole figure of the $\alpha$-phase has been assessed for various titanium alloy sheets. In FIG. 3, the measuring positions of XTD and XND are schematically shown.

Further, the X-ray anisotropy index mentioned above has been correlated with the ease of bending in the sheet longitudinal direction. As the index of the ease of bending when the sheet is bent into a pipe shape, the 0.2% proof stress in the bending direction (i.e. the sheet longitudinal direction, that is, the rolling direction) is used. The smaller the value is, the more easily bending is performed and the more easily pipe forming is performed.

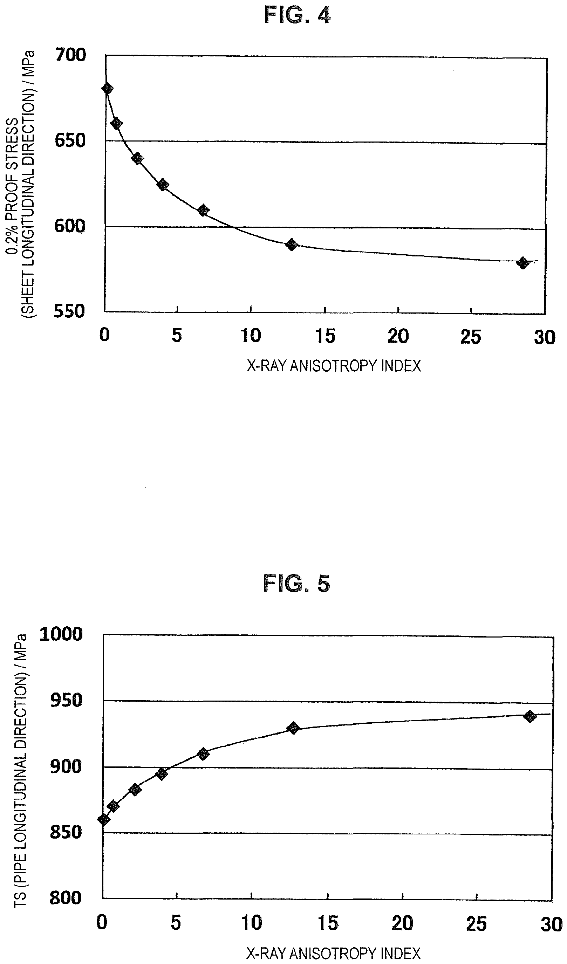

Using an $\alpha+\beta$ titanium alloy unidirectionally hot-rolled sheet containing 1.1 mass% Fe and 0.36 mass% O, unidirectional cold rolling and annealing were performed under various conditions; thus, materials exhibiting various X-ray anisotropy indices were prepared. Each of the materials was processed into a JIS 13B sheet-like tensile test piece, and the relationship between the X-ray anisotropy index and the 0.2% proof stress in the sheet longitudinal direction obtained by a tensile test (JIS Z 2201) was investigated. The results are shown in FIG. 4. As the X-ray anisotropy index becomes higher, the 0.2% proof stress in the sheet longitudinal direction becomes lower.

Using the same $\alpha+\beta$ titanium alloy sheet as the $\alpha+\beta$ titanium alloy cold-rolled and annealed sheet that was used for the measurement of the 0.2% proof stress in making the graph shown in FIG. 4, the deformation resistance and the ease of bending when the sheet longitudinal direction was bent into a pipe shape were investigated. As a result, it has been found that, when the 0.2% proof stress is 610 MPa or less, the deformation resistance during bending is low, and bendability is significantly improved. The X-ray anisotropy index when the 0.2% proof stress is 610 MPa or less is 5.0 or more.

Further, using the same $\alpha+\beta$ titanium alloy cold-rolled and annealed sheet as the $\alpha+\beta$ titanium alloy cold-rolled and annealed sheet that was used for the measurement of the 0.2% proof stress in making the graph shown in FIG. 4, the sheet was bent in the sheet longitudinal direction by pressing and both ends thereof were TIG-welded to produce a welded pipe, and the resulting full-scale pipe test piece was used to perform a tensile test; at this time, the relationship between the tensile strength (TS) in the pipe longitudinal direction and the X-ray anisotropy index was investigated. The results are shown in FIG. 5.

As shown in FIG. 5, as the X-ray anisotropy index increases, the tensile strength in the pipe longitudinal direction increases. It is when the X-ray anisotropy index is 5.0 or more that a tensile strength of 900 MPa or more, which is needed for use as small-diameter, thin-walled motorcycle frames and strength members for automobiles, is obtained.

Furthermore, when the X-ray anisotropy index of the $\alpha+\beta$ titanium alloy is 5.0 or more, a high Young's modulus of more than 130 GPa is obtained in the sheet width direction of the $\alpha+\beta$ titanium alloy cold-rolled and annealed sheet.

Based on these findings, the ratio between the strongest values of X-ray relative intensity (peak) from the bottom plane of the $\alpha$-phase in the first crystal grain and the second crystal grain (second crystal grain/first crystal grain) (XTD/XND) (the X-ray anisotropy index) is limited to 5.0 or more. The X-ray anisotropy index is preferably 7.5 or more in order to obtain even more excellent bendability, tensile strength, and Young's modulus. There is a case where the X-ray intensity from the first crystal grain is very small, that is, a case where the amount of crystal grains belonging to the first crystal grain is very small; in this case, the X-ray anisotropy index is very large and may diverge. Thus, no upper limit is provided on the X-ray anisotropy index.

Next, the composition of the $\alpha+\beta$ titanium alloy cold-rolled and annealed sheet for a welded pipe of the present invention is described. The $\alpha+\beta$ titanium alloy cold-rolled and annealed sheet used for a welded pipe of the present invention contains the chemical components shown below. Thus, the $\alpha+\beta$ titanium alloy cold-rolled and annealed sheet has high pipe formability, typified particularly by the bendability when the sheet is bent into a pipe shape to produce a welded pipe, and has a high strength and a high rigidity in the pipe longitudinal direction. The reason for selecting the constituent elements of the $\alpha+\beta$ titanium alloy cold-rolled and annealed sheet for a welded pipe of the present invention and the reason for limiting the component range will now be described. The "%" for the component range refers to mass%.

Fe is an inexpensive additive element among $\beta$-phase stabilizing elements, and has the action of strengthening the $\beta$-phase by solid solution strengthening. To obtain a strong T-texture in the texture after cold rolling and annealing in order to improve the bendability when the sheet is bent into a pipe shape, it is necessary to obtain a stable $\beta$-phase at an appropriate quantitative ratio during hot rolling and during the annealing after cold rolling. Fe has the characteristic that $\beta$-stabilizing capability is higher than those of other $\beta$-stabilizing elements. Therefore, the amount of contained Fe can be made smaller than those of other $\beta$-stabilizing elements, and the solid solution strengthening at room temperature by Fe is not increased so much; thus, high ductility can be kept and consequently bendability can be ensured. To obtain a stable $\beta$-phase up to an appropriate volume ratio in the hot rolling temperature range and during the annealing after cold rolling, 0.8% or more Fe content is necessary. On the other hand, Fe is likely to solidify and segregate in Ti, and when contained in a large amount, reduces the ductility due to solid solution strengthening and reduces the bendability, and causes a reduction in rigidity because of the increase of the $\beta$-phase fraction, which has a low Young's modulus. In view of these influences, the upper limit of the amount of contained Fe is set to 1.5%. A more preferred range of the amount of contained Fe is 0.9 to 1.3%.

N has the action of the solid solution strengthening of the $\alpha$-phase by being dissolved as an interstitial solid solution in the $\alpha$-phase. However, when N is contained above 0.020% by a common method, such as using sponge titanium containing a high concentration of N as the material, it is likely that an unmelted inclusion called an LDI will be produced, and the yield of the product will be reduced; hence, 0.020% is taken as the upper limit. A more preferred range of the amount of contained N is 0.010% or less. N is not necessarily contained.

O has the action of, similarly to N, the solid solution strengthening of the $\alpha$-phase by being dissolved as an interstitial solid solution in the $\alpha$-phase. These elements, including Fe having the action of being dissolved as a substitutional solid solution in the $\beta$-phase and strengthening the $\beta$-phase, contribute to increasing the strength in accordance with the Q value shown in Formula (1) below.

$$Q = [O] + 2.77 \times [N] + 0.1 \times [Fe] \cdots (1)$$

where [Fe], [O], and [N] represent the amounts of the respective elements contained [mass%].

In Formula (1), the coefficients of [N] and [Fe] in Q have been determined by assessing the equivalents of N and Fe to the solid solution strengthening capability by 1 mass% O, that is, the mass% of N and Fe providing a solid solution strengthening capability equivalent to the solid solution strengthening capability by 1 mass% O.

If the Q value shown in the above formula is less than 0.34, in general, it is difficult to obtain a strength of approximately 900 MPa or more, which is the tensile strength required for the $\alpha+\beta$ alloy. If the Q value is more than 0.55, the strength is increased too much and the ductility is reduced, and the cold reliability is slightly reduced. Thus, it is preferable that the lower limit of the Q value be set to 0.34 and the upper limit to 0.55. A more preferred range of Q is 0.36 to 0.50.

As a technology to obtain stretch-expand forming performance, which is a kind of processability, a technology of a titanium alloy containing oxygen and Fe is disclosed in Patent Literature 9; but Patent Literature 9 aims to reduce the material anisotropy in the sheet plane as much as possible in order to obtain such processability. Therefore, a large strength cannot be expected so much. Although a titanium alloy containing similar additive elements to those of the alloy of the present invention is described in Patent Literature 9, the amount of added O is lower and the strength range is lower than those of the alloy of the present invention; hence, both are different. Further, Patent Literature 9 aims at making the material anisotropy in the sheet plane as low as possible in order to improve mainly the stretch-expand forming performance in cold working; from this point of view, Patent Literature 9 is fundamentally different from the technical idea of the present invention.

The present invention relates particularly to a production method for developing the T-texture to improve bendability and enhance the strength and the rigidity in the sheet width direction. In the production method of the present invention, when unidirectional cold rolling is performed on a unidirectionally hot-rolled sheet as the material in the same direction as that of hot rolling, annealing based on holding for a period not less than the time t in accordance with Formula (2) is performed at not less than 500°C and less than 800°C in the case where the cold rolling rate is less than 25%, and annealing based on holding for a period not less than the time t in accordance with Formula (2) is performed at not less than 500°C and less than 620°C in the case where the cold rolling rate is 25% or more.

$$t = \exp(19180/T\text{-}15.6) \cdots (2)$$

where t: holding time (s), and T: holding temperature (K).

At this time, as the hot-rolled sheet used as the material of the $\alpha+\beta$ titanium alloy cold-rolled and annealed sheet, a sheet that has undergone unidirectional hot rolling with the pre-hot-rolling heating temperature set between the $\beta$-transformation temperature and the $\beta$-transformation temperature + 150°C, the rate of decrease in sheet thickness set to 90% or more, and the hot rolling finishing temperature set to not more than the $\beta$-transformation temperature - 50°C and not less than the $\beta$-transformation temperature - 200°C is preferable. This is because, in this case, the material of the $\alpha+\beta$ titanium alloy cold-rolled and annealed sheet is formed of a strong T-texture and the T-texture is maintained also in the end product. However, even when this is used as the start material, if the cold rolling direction is set to a direction crossing the hot rolling direction, a B-texture is developed and the target material characteristics are not obtained. Thus, to obtain a strong T-texture after unidirectional cold rolling, the unidirectional cold rolling needs to be performed in the same direction as the hot rolling direction.

At this time, in the case where the cold rolling rate during unidirectional cold rolling is less than 25%, the T-texture is maintained without being greatly influenced by the conditions of subsequent annealing, and therefore a high strength and a high Young's modulus are obtained in the sheet width direction. This is because the processing strain introduced by cold rolling is not enough to produce recrystallization and only recovery occurs, and thus a change in crystal orientation does not occur. Therefore, in the case where the cold rolling rate is less than 25%, even when annealing is performed in a wide condition range, the T-texture is maintained and a high strength in the sheet width direction can be ensured. At this time, when annealing is performed at 500°C or less, there are possibilities that a long time will be needed until recovery and that an FeTi intermetallic compound will be produced during the long-time holding and the ductility will be reduced; thus, 500°C or more is preferable. Further, when annealing is performed at 800°C or more, the $\beta$-phase fraction during holding may be increased, and this portion may become an acicular structure during cooling after the holding; consequently, the ductility may be reduced; thus, less than 800°C is used. At this time, the holding time until recovery occurs is the time shown by Formula (2); thus, it is preferable that holding for a period not less than the time t shown in Formula (2) be performed.

On the other hand, in the case where the cold rolling rate is 25% or more, a B-texture is developed and the strength and the Young's modulus in the sheet width direction are reduced, depending on the annealing conditions. This is because the strain introduced by cold rolling is high enough to produce recrystallization, and therefore recrystallization grains having the main component orientation of the B-texture are produced during annealing and a recrystallization texture develops with the annealing time. In order to prevent recrystallization and bring about only recovery in this case, annealing holding may be performed at a temperature T of not less than 500°C and less than 620°C for a period not less than the holding time t calculated from Formula (2). At this time, if annealing is performed for a holding time of less than the holding time t of Formula (2), sufficient recovery does not occur and thus the ductility is not improved. Further, if annealing is performed at 620°C or more, recrystallization occurs and a B-texture is produced, and consequently the strength and the Young's modulus in the sheet width direction are reduced. Thus, annealing at less than 620°C for a holding time of not less than t of Formula (2) is effective. In an alloy in this composition range, recrystallization does not occur when annealing at 500°C or less is performed and therefore the T-texture is maintained also when holding is performed for a very long time in this temperature range; but the holding time shown in Formula (2) is prescribed with consideration of productivity and economy, because conditions in the range shown by Formula (2) are enough to bring about recovery, which is an objective of annealing, sufficiently.

As long as the annealing after cold rolling satisfies the conditions mentioned above in accordance with the cold rolling rate, the effect is the same also when the annealing is repeated multiple times. In other words, as long as the intermediate annealing conditions and the final annealing conditions when two or more times of cold rolling are performed satisfy the conditions mentioned above, a strong T-texture is maintained, and a high strength and a high Young's modulus in the sheet width direction are maintained.

Next, an $\alpha+\beta$ titanium alloy welded pipe of the present invention is described. The welded pipe of the present invention is formed by using an $\alpha+\beta$ titanium alloy cold-rolled and annealed sheet for a welded pipe having a prescribed texture and setting the sheet width direction as the longitudinal direction of the pipe and the sheet longitudinal direction as the round direction of the pipe. Therefore, the welded pipe of the present invention is a welded pipe excellent in the strength and the rigidity in the pipe longitudinal direction in which the tensile strength in the pipe longitudinal direction is more than 900 MPa and the Young's modulus in the pipe longitudinal direction is more than 130 GPa.

As described above, in Patent Literature 10, in regard to an $\alpha+\beta$ titanium alloy, a technology related to a high-strength $\alpha+\beta$ titanium alloy pipe product having an axial strength of 900 MPa or more is disclosed; but in this invention, the material is limited to a hot-rolled sheet, and therefore it has been difficult to make the sheet thickness small and it has been difficult to produce a small-diameter, thin-walled pipe used for bicycle frames and the like in which the need for light weight is high. However, by using a cold-rolled and annealed sheet as the welded pipe material as provided by the present invention, it has become possible to produce a small-diameter, thin-walled pipe having a high rigidity and a high strength in the axial direction. Although no lower limits of the outer diameter and the wall thickness are set on the titanium alloy welded pipe of the present invention product, it is when the maximum outer diameter is 60 mm and the maximum wall thickness is 2.0 mm that particularly the weight reduction effect is high and the advantage is great. In particular, in the case of a wall thickness larger than this, even a hot-rolled sheet can cope partially and the production cost advantage is lessened. Thus, the wall thickness of the pipe is preferably 2 mm or less. Further, the outer diameter of the pipe is preferably 60 mm or less.

In Non-Patent Literature 1, it is described that, in pure titanium, a texture similar to the T-texture is formed by performing heating in the $\beta$-temperature range and unidirectional rolling in the $\alpha$-temperature range all the time. However, Non-Patent Literature 1 relates to pure titanium, and is therefore a different process from the present invention using a titanium alloy. Furthermore, in Non-Patent Literature 1, effects such as an improvement in pipe formability are not investigated.

In Patent Literature 8, a technology in which, in pure titanium, hot rolling is started in the $\beta$-temperature range is disclosed; but this aims to prevent the occurrence of creases and flaws by reducing the size of the crystal grain, and this aim is greatly different from the aim of the present invention. Furthermore, the present invention deals with an $\alpha+\beta$ alloy containing 0.5 to 1.5 mass% Fe, and is therefore greatly different technically from these materials, which have a composition close to pure titanium.

[Examples]

<Example 1>

A titanium material having each of the compositions shown in Table 1 was melted by the vacuum arc melting method, the test piece was hot rolled into slabs, heating was performed to a hot rolling heating temperature of 930°C, and then hot rolling was performed to obtain a 3-mm hot-rolled sheet. The unidirectionally hot-rolled sheet was annealed at 800°C for 60 s and was then pickled to remove the oxidized scales, and the test piece was cold rolled; then, various characteristics were evaluated.

For test numbers 3 to 14 shown in Table 1, in the cold rolling process, unidirectional cold rolling was performed at a cold rolling rate of 40.0% in the same direction as that of the unidirectional hot rolling, then intermediate annealing at 600°C for 10 minutes, which satisfy Formula (2), was performed, and further unidirectional cold rolling was performed at a cold rolling rate of 33.3% in the same direction as that of the unidirectional hot rolling; thus, a thin sheet with a sheet thickness of 1.20 mm was obtained. Only for test numbers 1 and 2, cold rolling in the sheet width direction perpendicular to the hot rolling direction was performed. After the cold rolling, annealing based on 600°C and 15-minute holding, which satisfy Formula (2), was performed.

[Table 1]

| Test No. | Fe (mass%) | O (mass%) | N (mass%) | Q (mass%) | β-Transformation temperature (°C) | X-ray anisotropy index (XTD/XND) | 0.2% Proof stress in sheet longitudinal direction (MPa) | Tensile strength in pipe longitudinal direction (MPa) | Young's modulus in pipe longitudinal direction (GPa) | Notes |
|---|---|---|---|---|---|---|---|---|---|---|
| 1 | 1.1 | 0.31 | 0.002 | 0.43 | 915 | 0.45 | 627 | 825 | 118 | Comparative Example |
| 2 | 1.0 | 0.34 | 0.004 | 0.45 | 920 | 2.11 | 617 | 882 | 123 | Comparative Example |
| 3 | 0.2 | 0.33 | 0.003 | 0.36 | 934 | 6.12 | 585 | 833 | 124 | Comparative Example |
| 4 | 0.9 | 0.35 | 0.004 | 0.45 | 923 | 10.91 | 597 | 918 | 131 | Present invention |
| 5 | 1.2 | 0.34 | 0.004 | 0.47 | 916 | 18.51 | 578 | 933 | 132 | Present invention |
| 6 | 1.9 | 0.35 | 0.004 | 0.55 | 904 | 8.88 | 651 | 1079 | 135 | Comparative Example |
| 7 | 0.9 | 0.19 | 0.003 | 0.29 | 903 | 6.45 | 562 | 831 | 125 | Comoarative Example |
| 8 | 0.9 | 0.36 | 0.003 | 0.46 | 924 | 12.18 | 588 | 946 | 134 | Present invention |
| 9 | 0.9 | 0.48 | 0.003 | 0.58 | 938 | 14.22 | 652 | 1049 | 136 | Comparative Example |
| 10 | 1.2 | 0.38 | 0.001 | 0.50 | 920 | 49.12 | 587 | 927 | 135 | Present invention |
| 11 | 1.2 | 0.38 | 0.004 | 0.51 | 921 | 10.18 | 595 | 961 | 134 | Present invention |
| 12 | 1.2 | 0.38 | 0.042 | 0.62 | 927 | - | - | - | - | Comparative Example |
| 13 | 1.1 | 0.37 | 0.002 | 0.49 | 921 | 20.29 | 589 | 972 | 137 | Present invention |

| Test No. | Fe (mass%) | O (mass%) | N (mass%) | Q (mass%) | β-Transformation temperature (°C) | X-ray anisotropy index (XTD/XND) | 0.2% Proof stress in sheet longitudinal direction (MPa) | Tensile strength in pipe longitudinal direction (MPa) | Young's modulus in pipe longitudinal direction (GPa) | Notes |
|---|---|---|---|---|---|---|---|---|---|---|
| 14 | 1.1 | 0.33 | 0.002 | 0.45 | 917 | 9.45 | 581 | 928 | 134 | Present invention |
| Q=[O]+2.77*[N]+0.1*[Fe] | | | | | | | | | | |

A tensile test piece was taken from each of these cold-rolled and annealed sheets and tensile characteristics were investigated. Further, each strongest value of X-ray relative intensity from the bottom plane of the $\alpha$-phase was measured by the X-ray diffraction method for the first crystal grain that is oriented to a region in which the angle $\theta$ that is the angle between the c-axis and the normal-to-sheet direction in the (0002) pole figure of the $\alpha$-phase having a hexagonal crystal structure in the texture in the sheet plane direction is 0 to 30° and for the second crystal grain that is oriented to a region in which the angle $\theta$ is 80 to 100° and the angle $\varphi$ that is the angle between the line of projection of the c-axis onto the sheet plane and the sheet width direction in the (0002) pole figure of the $\alpha$-phase is -10 to 10°, and the X-ray anisotropy index that is the ratio between the strongest values measured (second crystal grain (XTD)/first crystal grain (XND)) was calculated; thus, the degree of texture development in the sheet plane direction was assessed.

Pipe formability was assessed using the 0.2% proof stress in the sheet longitudinal direction. In the pipe production method according to the present invention in which the sheet longitudinal direction is bent into a pipe shape and the butts are welded to form a welded pipe, when the 0.2% proof stress in the sheet longitudinal direction is 610 MPa or less, the plastic working in the sheet longitudinal direction is easy and therefore pipe formability is good.

Next, using the cold-rolled and annealed sheet, the sheet longitudinal direction was bent into a pipe shape by press bending, and the butts were TIG-welded to form a welded pipe with an outer diameter of 20.0 mm and a wall thickness of 1.20 mm. A full-scale pipe tensile test piece was taken from the welded pipe, and the Young's modulus and the tensile strength (JIS Z 2201) in the longitudinal direction of the pipe product were assessed. For the pipe product used for frames for motorcycles and bicycles, strength members for automobiles, and the like, it is preferable to have a Young's modulus of 130 GPa or more and a tensile strength of 900 MPa or more. The results of assessment of these characteristics are shown in Table 1 as well.

In Table 1, test numbers 1 and 2 are results in $\alpha+\beta$ titanium alloys produced by a process including also rolling in the sheet width direction in the cold rolling, and have an X-ray anisotropy index of less than 5.0. In both of test numbers 1 and 2, the 0.2% proof stress in the sheet longitudinal direction is more than 610 MPa and the deformation resistance when pipe forming is performed with the sheet longitudinal direction set as the bending direction is high, and pipe forming producibility is low. Furthermore, the tensile strength in the pipe longitudinal direction of the produced pipe is less than 900 MPa and the Young's modulus has not reached 130 GPa, and these titanium alloys are not preferable for use requiring strength and rigidity in the pipe longitudinal direction.

In contrast, test numbers 4, 5, 8, 10, 11, 13, and 14, which are Examples of the present invention produced in accordance with the present invention, the 0.2% proof stress in the sheet longitudinal direction is less than 610 MPa and the deformation resistance in the case of bending in the sheet longitudinal direction is sufficiently low, and the pipe formability when pipe forming is performed with the sheet longitudinal direction set as the round direction of the pipe is excellent. Furthermore, the tensile strength in the longitudinal direction of the produced pipe is more than 900 MPa and the Young's modulus is more than 130 GPa, and therefore preferred material characteristics are exhibited for use in which strength and rigidity in the pipe longitudinal direction are required.

On the other hand, in test numbers 3 and 7, although the 0.2% proof stress in the sheet longitudinal direction is lower than 610 MPa and pipe formability is good, the tensile strength in the pipe longitudinal direction after pipe forming has not reached 900 MPa. Of them, in test number 3, since the amount of contained Fe was below the lower limit value of the present invention, the tensile strength in the pipe longitudinal direction was low. Further, in test number 7, since particularly the amounts of contained nitrogen and oxygen were low and the oxygen-equivalent value Q was below the lower limit value of the prescribed amount, the tensile strength in the pipe longitudinal direction has not reached a sufficiently high level, either.

In test numbers 6 and 9, although the X-ray anisotropy index is above 5.0, the 0.2% proof stress in the sheet longitudinal direction is above 610 MPa, and the characteristic of being difficult to form into a pipe is exhibited. This is because, in test numbers 6 and 9, the amount of contained Fe and the Q value exceeded the upper limit values of the present invention, respectively, and therefore the strength was increased too much, as an alloy based on the present components.

On the other hand, in test number 12, many defects occurred during cold rolling and the yield of the product was low, and hence the characteristics were not able to be evaluated. This is because N was contained above the upper limit of the present invention by a common method based on using a high-nitrogen-containing sponge, and consequently a large number of LDIs occurred.

From the above results, a titanium alloy sheet having the amounts of contained elements and the XTD/XND prescribed by the present invention has strong material anisotropy, and accordingly has a low proof stress in the sheet longitudinal direction and a low deformation resistance when bending is performed in the sheet longitudinal direction to produce a pipe; thus, it has been verified that the titanium alloy sheet is excellent in the producibility of a pipe product and is excellent in the tensile strength and the Young's modulus in the pipe longitudinal direction of the pipe product.

When the amounts of alloy elements and the XTD/XND are outside those prescribed by the present invention, strong material anisotropy and the accompanying low deformation resistance in the sheet longitudinal direction and the accompanying high strength and high Young's modulus in the pipe longitudinal direction of the pipe product cannot be obtained.

<Example 2>

A titanium material having each of the compositions of test numbers 4 and 10 of Table 1 was melted and the test piece was hot rolled into slabs, and one of the slabs was subjected to unidirectional hot rolling into a hot-rolled sheet with a thickness of 3.0 mm; then annealing at 800°C held for 120 seconds and pickling were performed, and after that cold rolling and annealing were performed under the conditions shown in Tables 2 and 3; and the test piece was used to investigate the tensile characteristics and calculate the X-ray anisotropy index to assess the degree of texture development in the sheet plane direction, the 0.2% proof stress in the sheet longitudinal direction, and the Young's modulus and the tensile strength in the longitudinal direction of the pipe product, in a similar manner to Example 1. The results of assessment of these characteristics are shown in Tables 2 and 3 as well. Also the minimum annealing holding time t calculated by Formula (2) in the case where annealing was performed at the annealing temperature shown in Tables 2 and 3 is shown in the tables. Table 2 is the results in cold-rolled and annealed sheets of the composition of test number 4, and Table 3 is those of test number 10.

EP 3 112 483 A1

[Table 2]

Test No. 4 in Table 1

| Test No. | Cold rolling rate (%) | Annealing holding temperature (°C) | Annealing holding time (s) | Minimum annealing holding time according to Formula (2) (s) | X-ray anisotropy index (XTD/XND) | 0.2% Proof stress in sheet longitudinal direction (MPa) | Tensile strength in pipe longitudinal direction (MPa) | Young's modulus in pipe longitudinal direction (GPa) | Notes |
|---|---|---|---|---|---|---|---|---|---|
| 15 | 55.9 | 615 | 900 | 402 | 10.87 | 591 | 921 | 133 | Present invention (1),(2),(3) |
| 16 | 22.2 | 770 | 600 | 16 | 33.15 | 584 | 935 | 135 | Present invention (1),(2),(3) |
| 17 | 21.0 | 590 | 14400 | 751 | 29.53 | 590 | 932 | 133 | Present invention (1),(2),(3) |
| 18 | 20.3 | 880 | 600 | 3 | 5.51 | 598 | 878 | 126 | Comparative Example |
| 19 | 35.5 | 450 | 600 | 55429 | 35.12 | 579 | 788 | 131 | Comparative Example |
| 20 | 35.5 | 595 | 1500 | 660 | 25.34 | 589 | 928 | 133 | Present invention (1),(2),(3) |
| 21 | 23.1 | 600 | 7200 | 582 | 19.90 | 588 | 927 | 133 | Present invention (1),(2),(3) |
| 22 | 23.1 | 600 | 300 | 582 | 19.11 | 582 | 878 | 132 | Comparative Example |
| 23 | 42.8 | 580 | 20 | 974 | 15.77 | 593 | 853 | 132 | Comparative Example |
| 24 | 42.8 | 580 | 1800 | 974 | 16.61 | 589 | 919 | 131 | Present invention (1),(2),(3) |

16

| Test No. | Cold rolling rate (%) | Annealing holding temperature (°C) | Annealing holding time (s) | Minimum annealing holding time according to Formula (2) (s) | X-ray anisotropy index (XTD/XND) | 0.2% Proof stress in sheet longitudinal direction (MPa) | Tensile strength in pipe longitudinal direction (MPa) | Young's modulus in pipe longitudinal direction (GPa) | Notes |
|---|---|---|---|---|---|---|---|---|---|
| 25 | 42.8 | 700 | 300 | 61 | 4.23 | 621 | 885 | 121 | Comparative Example |
| β-Transformation temperature being 923°C | | | | | | | | | |

[Table 3]

| Test No. 10 in Table 1 | | | | | | | | | |
|---|---|---|---|---|---|---|---|---|---|
| Test No. | Cold rolling rate (%) | Annealing holding temperature (°C) | Annealing holding time (s) | Minimum annealing holding time according to Formula (2) (s) | X-ray anisotropy index (XTD/XND) | 0.2% Proof stress in sheet longitudinal direction (MPa) | Tensile strength in pipe longitudinal direction (MPa) | Young's modulus in pipe longitudinal direction (GPa) | Notes |
| 26 | 50.4 | 550 | 3600 | 2210 | 16.87 | 588 | 924 | 133 | Present invention (1), (2),(3) |
| 27 | 19.3 | 670 | 28800 | 114 | 31.44 | 579 | 926 | 135 | Present invention (1), (2),(3) |
| 28 | 22.2 | 770 | 60 | 16 | 18.59 | 581 | 932 | 133 | Present invention (1), (2),(3) |
| 29 | 21.8 | 900 | 120 | 2 | 5.12 | 604 | 869 | 125 | Comparative Example |
| 30 | 40.7 | 430 | 1800 | 117860 | 28.19 | 583 | 751 | 131 | Comparative Example |
| 31 | 40.7 | 590 | 1800 | 751 | 11.85 | 592 | 923 | 132 | Present invention (1), (2),(3) |
| 32 | 22.4 | 700 | 14400 | 61 | 20.53 | 579 | 931 | 134 | Present invention (1), (2),(3) |
| 33 | 22.4 | 700 | 30 | 61 | 19.45 | 580 | 756 | 133 | Comparative Example |
| 34 | 55.2 | 600 | 30 | 582 | 21.33 | 576 | 831 | 133 | Comparative Example |
| 35 | 55.2 | 600 | 900 | 582 | 15.41 | 592 | 923 | 132 | Present invention (1), (2),(3) |

EP 3 112 483 A1

| Test No. | Cold rolling rate (%) | Annealing holding temperature (°C) | Annealing holding time (s) | Minimum annealing holding time according to Formula (2) (s) | X-ray anisotropy index (XTD/XND) | 0.2% Proof stress in sheet longitudinal direction (MPa) | Tensile strength in pipe longitudinal direction (MPa) | Young's modulus in pipe longitudinal direction (GPa) | Notes |
|---|---|---|---|---|---|---|---|---|---|
| 36 | 55.2 | 680 | 3600 | 92 | <u>3.78</u> | <u>619</u> | <u>878</u> | <u>124</u> | Comparative Example |
| β-Transformation temperature being 920°C | | | | | | | | | |

Of them, in test numbers 15, 16, 17, 20, 21, 24, 26, 27, 28, 31, 32, and 35, which are Examples of the present invention (1) produced by the method described in the present invention (2), a 0.2% proof stress of 610 MPa or less is exhibited in the sheet longitudinal direction and good pipe formability is obtained; and a tensile strength of more than 900 MPa and a Young's modulus of more than 130 GPa are obtained in the longitudinal direction of the fabricated pipe product, and the strength and the rigidity in the pipe longitudinal direction are excellent.

On the other hand, test numbers 18, 19, 22, 23, 25, 29, 30, 33, 34, and 36 have one or more of the items of the 0.2% proof stress in the sheet longitudinal direction being more than 610 MPa and pipe formability being poor, the tensile strength in the pipe longitudinal direction being less than 900 MPa, and the Young's modulus in the pipe longitudinal direction being less than 130 GPa, and do not have strength and rigidity characteristics sufficient as frames of motorcycles and strength members for automobiles and the like, in which particularly a small-diameter, thin-walled pipe is required.

Of them, for test numbers 18 and 29, the reason for the results is that the annealing holding temperature in the case where the cold rolling rate was less than 25% was higher than the upper limit of the present invention; therefore, the $\beta$-phase fraction became too high and the most part became an acicular structure during the annealing holding, and the ductility in the sheet width direction was reduced; consequently, the tensile strength in the pipe longitudinal direction (i.e. the sheet width direction) did not become sufficiently high.

In test numbers 19 and 30, the annealing temperature was not more than the lower limit temperature of the present invention, and in test numbers 19, 22, 23, 30, 33, and 34, the annealing holding time was not more than the lower limit of the present invention; therefore, in these test numbers, recovery did not occur sufficiently and the ductility was not sufficient. Thus, the reason for the results of these test numbers is that the tensile test piece broke before it experienced constriction in the tensile test in the sheet width direction, that is, the pipe longitudinal direction, and the tensile strength in the sheet width direction, that is, the pipe longitudinal direction did not become sufficiently high.

For test numbers 25 and 36, the reason for the results is that, under the cold rolling rate condition of 25% or more, the annealing holding temperature was above the upper limit temperature of the present invention; therefore, recrystallization grains were produced and a recrystallization texture formed of a B-texture developed with the annealing time, and accordingly the anisotropy was reduced; consequently, the 0.2% proof stress in the sheet longitudinal direction was increased and the pipe formability was reduced, and neither the strength nor the Young's modulus in the sheet width direction (i.e. the pipe longitudinal direction) became sufficiently high.

From the above results, it has been verified that, in the case where a sheet is formed into a pipe shape and both ends are butt-welded to produce a welded pipe, the production can be performed by cold rolling and annealing a titanium alloy having the texture and the additive elements in the component range provided by the present invention in accordance with the cold rolling rate and the annealing conditions provided by the present invention in order to obtain an $\alpha+\beta$ alloy thin sheet material having the characteristics that deformation resistance is low, pipe formability is excellent, and the tensile strength and the Young's modulus in the longitudinal direction of the pipe-formed welded pipe are high, and performing pipe forming with the longitudinal direction of the sheet set as the round direction of the pipe.

Industrial Applicability

According to the present invention, a titanium alloy welded pipe in which the bendability when a sheet material is bent into a pipe shape is good and the strength and the Young's modulus in the pipe longitudinal direction are high is obtained. Furthermore, a titanium alloy welded pipe can be produced using an $\alpha+\beta$ titanium alloy cold-rolled and annealed sheet with enhanced pipe formability. This can be widely used in frames of motorcycles and bicycles and automobile parts such as strength members of automobiles in which particularly weight reduction is required, and in consumer products in which strength and rigidity in the pipe longitudinal direction are needed, etc.

**Claims**

1. An $\alpha+\beta$ titanium alloy welded pipe produced by processing an $\alpha+\beta$ titanium alloy cold-rolled and annealed sheet consisting of, in mass%,
   Fe: 0.8% to 1.5%,
   N: 0.02% or less, and
   the balance: Ti and impurities, and
   satisfying Q shown in Formula (1) below being 0.34 to 0.55,

   wherein a tensile strength in a pipe longitudinal direction is more than 900 MPa and a Young's modulus in the pipe longitudinal direction is more than 130 GPa,

$$Q = [O] + 2.77 \times [N] + 0.1 \times [Fe] \cdots (1)$$

where [Fe], [O], and [N] represent the amounts of the respective elements contained [mass%].

2. A method for producing an $\alpha+\beta$ titanium alloy welded pipe, comprising:

producing a welded pipe by processing an $\alpha+\beta$ titanium alloy cold-rolled and annealed sheet consisting of, in mass%,
Fe: 0.8% to 1.5%,
N: 0.02% or less, and
the balance: Ti and impurities, and
satisfying Q shown in Formula (1) below being 0.34 to 0.55,

wherein, in a texture of the $\alpha+\beta$ titanium alloy cold-rolled and annealed sheet, assuming that a normal-to-rolling-plane direction is denoted by ND, a sheet longitudinal direction is denoted by RD, a sheet width direction is denoted by TD, a direction normal to a (0001) plane of an $\alpha$-phase is taken as a c-axis direction, an angle between the c-axis direction and ND is denoted by $\theta$, an angle between a line of projection of the c-axis direction onto a sheet plane and the sheet width direction (TD) is denoted by $\varphi$, a strongest intensity out of (0002)-reflection relative intensities of X-rays caused by crystal grains falling within a range of angle $\theta$ of not less than 0 degrees and not more than 30 degrees and angle $\varphi$ of -180 degrees to 180 degrees is denoted by XND, and a strongest intensity out of (0002)-reflection relative intensities of X-rays caused by crystal grains falling within a range of angle $\theta$ of not less than 80 degrees and less than 100 degrees and angle $\varphi$ of $\pm$ 10 degrees is denoted by XTD, a ratio XTD/XND is 5.0 or more, and
when the $\alpha+\beta$ titanium alloy cold-rolled and annealed sheet is processed into a pipe shape, the sheet width direction of the $\alpha+\beta$ titanium alloy cold-rolled and annealed sheet is set as a longitudinal direction of the $\alpha+\beta$ titanium alloy welded pipe and the sheet longitudinal direction of the $\alpha+\beta$ titanium alloy cold-rolled and annealed sheet is set as a round direction of the $\alpha+\beta$ titanium alloy welded pipe,

$$Q = [O] + 2.77 \times [N] + 0.1 \times [Fe] \cdots (1)$$

where [Fe], [O], and [N] represent the amounts of the respective elements contained [mass%].

3. The method for producing an $\alpha+\beta$ titanium alloy welded pipe according to claim 2, wherein
the $\alpha+\beta$ titanium alloy cold-rolled and annealed sheet is produced by using a unidirectionally hot-rolled sheet as a material and performing unidirectional cold rolling in the same direction as a direction of hot rolling and annealing, and annealing for a holding time of not less than t of Formula (2) below is performed at not less than 500°C and less than 800°C in a case where a cold rolling rate of the unidirectional cold rolling is less than 25% and annealing for a holding time of not less than t of Formula (2) below is performed at not less than 500°C and less than 620°C in a case where the cold rolling rate is 25% or more,

$$t = \exp(19180/T\text{-}15.6) \cdots (2)$$

where t: holding time (s), and T: holding temperature (K).

# FIG. 1

(a)

ND DIRECTION
(NORMAL-TO-SHEET DIRECTION)

DIRECTION NORMAL TO
(0001) PLANE OF α-PHASE
(c-AXIS DIRECTION)

$\theta$

$\phi$

RD DIRECTION
(ROLLING DIRECTION)

TD DIRECTION
(SHEET WIDTH DIRECTION)

(b)

ND DIRECTION
(NORMAL-TO-SHEET DIRECTION)

$\theta$ =30 DEGREES

RD DIRECTION
(ROLLING DIRECTION)

TD DIRECTION
(SHEET WIDTH DIRECTION)

(c)

ND DIRECTION
(NORMAL-TO-SHEET DIRECTION)

$\theta$ =100 DEGREES

$\theta$ =80 DEGREES

$\phi$ =-10 DEGREES

$\phi$ =10 DEGREES

RD DIRECTION
(ROLLING DIRECTION)

TD DIRECTION
(SHEET WIDTH DIRECTION)

## FIG. 2

# FIG. 3

REGION B: CORRESPONDING
TO REGION OF FIG. 1 (b)

RD
DIRECTION

TD
DIRECTION

REGION C: CORRESPONDING
TO REGION OF FIG. 1 (c)

REGIONS CORRESPONDING TO FIGS. 1 (b) AND 1 (c)
IN (0001) POLE FIGURE OF TITANIUM α-PHASE

## FIG. 4

## FIG. 5

## INTERNATIONAL SEARCH REPORT

| International application No. |
|---|
| PCT/JP2015/061117 |

**A. CLASSIFICATION OF SUBJECT MATTER**
*C22C14/00*(2006.01)i, *B21C37/08*(2006.01)i, *C22F1/18*(2006.01)i, *C22F1/00*
(2006.01)n

According to International Patent Classification (IPC) or to both national classification and IPC

**B. FIELDS SEARCHED**

Minimum documentation searched (classification system followed by classification symbols)
C22C14/00, B21C37/08, C22F1/00-1/18

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho  1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2013-79414 A  (Nippon Steel & Sumitomo Metal Corp.),<br>02 May 2013 (02.05.2013),<br>tables 1 to 4<br>(Family: none) | 1-2<br>3 |
| A | WO 2012/115242 A1  (Nippon Steel Corp.),<br>30 August 2012 (30.08.2012),<br>tables 1 to 4<br>& US 2013/327449 A1      & CN 103392019 A<br>& KR 10-2013-122650 A | 1-3 |
| A | JP 8-295969 A  (Nippon Steel Corp.),<br>12 November 1996 (12.11.1996),<br>tables 1 to 6<br>(Family: none) | 1-3 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 July 2015 (02.07.15) | 14 July 2015 (14.07.15) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9228014 A
- JP H234752 A
- JP 2001115222 A
- JP 2000158141 A
- JP 4486530 B
- JP 4516440 B

- JP 2007270199 A
- JP 61159562 A
- JP 2008127633 A
- JP 2013079414 A
- WO 2012115242 A1

**Non-patent literature cited in the description**

- Titanium Japan. *The Japan Titanium Society,* 28 April 2006, vol. 54 (1), 42-51